Europäisches Patentamt

European Patent Office

Office européen des brevets

(11) Veröffentlichungsnummer: **0 133 987**
**A1**

(12) # EUROPÄISCHE PATENTANMELDUNG

(21) Anmeldenummer: **84109090.5**

(22) Anmeldetag: **31.07.84**

(51) Int. Cl.⁴: **A 01 D  34/70**, A 01 D  34/42

(30) Priorität: **03.08.83  DE 3328081**

(43) Veröffentlichungstag der Anmeldung: **13.03.85**
**Patentblatt 85/11**

(84) Benannte Vertragsstaaten: **AT BE CH FR LI LU NL**

(71) Anmelder: **SABO Maschinenfabrik GmbH & Co KG,
Postfach 310 105,
D-5270 Gummersbach 31 Dieringhausen (DE)**

(72) Erfinder: **Die Erfinder haben auf ihre Nennung verzichtet**

(74) Vertreter: **Groening, Hans Wilhelm, Dipl.-Ing.,
Siebertstrasse 4 Postfach 860 340,
D-8000 München 86 (DE)**

(54) Fangvorrichtung für das Schnittgut eines Rasenmähers.

(57)    Fangvorrichtung für das Schnittgut eines Rasenmähers, insbesondere Sichelmähers, welcher mit seiner Fangöffnung (2) an dem Rasenmäher ansetzbar sowie mit einem Boden (3) versehen ist. Der Boden (3) ist an seiner der Fangöffnung (2) abgekehrten Seite (4) in einem Gestell (15) schwenkbar gelagert und an seiner der Fangöffnung (2) zugekehrten Seite (4) mit einer Feststellvorrichtung (6) zur Arretierung am Gestell (15) in seiner angehobenen Stellung als Umlenkvorrichtung für das aus der Auswurföffnung des Rasenmähers ausgeworfene Schnittgut in Richtung auf den Rasen versehen. Hierdurch kann die Fangvorrichtung in ihrem an den Rasenmäher angesetzten Zustand das aus dem Auswurfkanal des Rasenmähers kommende Schnittgut in Richtung auf die bereits geschnittene Rasenfläche ablenken. Gleichzeitig wird eine kurze Baulänge erreicht.

## Fangvorrichtung für das Schnittgut
## eines Rasenmähers

Die Erfindung betrifft eine Fangvorrichtung für das Schnittgut eines Rasenmähers, insbesondere Sichelmähers, welche mit ihrer Fangöffnung an dem Rasenmäher ansetzbar sowie mit einem Boden versehen ist.

In der Regel sind Rasenmäher mit einer Auswurföffnung für das Schnittgut am rückwärtigen Ende versehen, durch das das Schnittgut durch kinetische Energie und durch den Luftstrom des Messers in die sack- oder korbartige Fangvorrichtung gefördert und dort abgelegt wird. Die Fangvorrichtung muß je nach Menge des anfallenden Schnittgutes mehr oder weniger häufig geleert werden. Ist der zu mähende Rasen sehr hoch, so führt die große Menge des anfallenden Schnittgutes zu einem raschen Füllen der Fangvorrichtung, so daß diese entsprechend häufig geleert werden muß. Um diesem Nachteil abzuhelfen, ist es bekannt, ähnlich wie bei Rasenmähern mit seitlichem Auswurf, das Schnittgut auf der bereits geschnittenen Rasenfläche abzulegen. Zu diesem Zweck sind Klappen am Auswurfkanal des Rasenmähers bekannt, die das Schnittgut zur Seite und nach unten umlenken und eine relativ große Baulänge des Rasenmähers bedingen.

Der Erfindung liegt die Aufgabe zugrunde, eine Fangvorrichtung vorzuschlagen, die in ihrem an den Rasenmäher angesetzten Zustand das Ablegen des Schnittgutes auf der bereits geschnittenen Rasenfläche ermöglicht, so daß sich auch eine kürzere Baulänge des Rasenmähers erreichen läßt.

Die Erfindung löst diese Aufgabe durch die im Kennzeichn des Patentanspruchs 1 enthaltenen Merkmale.

Der Vorteil dieser Anordnung besteht darin, daß das Schnittgut durch die Bodenplatte der Fangvorrichtung nach unten umgelenkt und durch den jetzt offenen Boden der Fangsvorrichtung auf dem bereits geschnittenen Rasen abgelegt werden kann.

Durch die im wesentlichen vollständige Ausfüllung des freien Querschnitts der Fangvorrichtung durch den angehobenen Boden gemäß Anspruch 2 wird das gesamte Schnittgut in Richtung auf den Rasen umgelenkt.

Die Anlenkung des Bodens an seiner der Fangöffnung abgewandten Seite der Fangvorrichtung und die Verbindung des Bodens mit einem durch die Oberseite der Fangvorrichtung hindurchgeführten Stab sichert einerseits die Verbindung des Bodens mit der Fangvorrichtung und andererseits eine bequeme Anhebbarkeit des Bodens in die Umlenkstellung.

Bei einer zweiten Ausführungsform der Erfindung ist die Arretierung des Bodens zumindest in seiner oberen Endlage mittels einer Rastvorrichtung vorgesehen, die an der Fangvorrichtung fest zugeordneten Teilen angreift. Zur leichteren Handhabung ist die Unterseite des Bodens nahe der Fangöffnung mit einem Griff versehen.

Nachstehend ist die Erfindung anhand von zwei in der Zeichnung schematisch dargestellten Ausführungsbeispielen erläutert. Es zeigen:

Fig. 1 eine perspektivische Ansicht einer ersten Ausführungsform einer Fangvorrichtung, deren Boden die normale untere Stellung einnimmt;

Fig. 2 die Fangvorrichtung gemäß Fig. 1, mit in

die angehobene Stellung hochgeschwenktem, arretierten Boden;

Fig. 3 eine Seitenansicht der Fangvorrichtung in Fig. 1 in ihrer an einer Auswurföffnung eines Rasenmähers angesetzten Stellung;

Fig. 4 eine Seitenansicht ähnlich Fig. 3, jedoch mit dem in Umlenkstellung befindlichen Boden der Fangvorrichtung;

Fig. 5 eine zweite Ausführungsform einer Fangvorrichtung in perspektivischer Ansicht und

Fig. 6 die mit "X" bezeichnete Einzelheit in Fig. 5 als Rastvorrichtung zwischen Boden und Gestell der Fangvorrichtung in vergrößertem Maßstab.

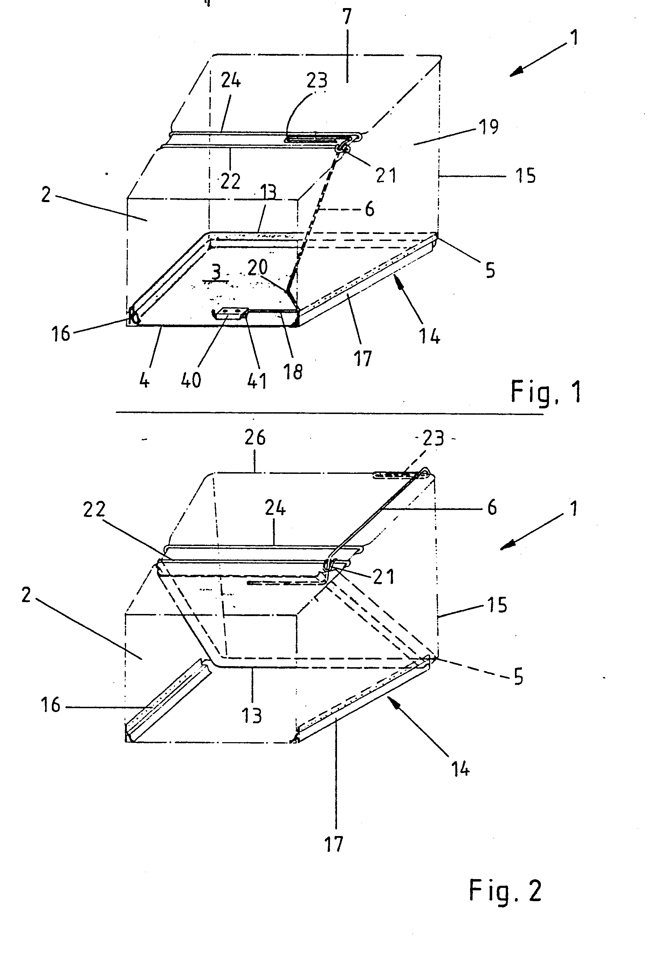

In den Fig. 1 bis 4 ist eine Fangvorrichtung 1 in Form eines Fangkorbes für das Schnittgut eines Rasenmähers, insbesondere eines Sichelmähers, gezeigt, welche mit ihrer Fangöffnung 2 an den Rasenmäher 10 ansetzbar sowie mit einem Boden 3 versehen ist.

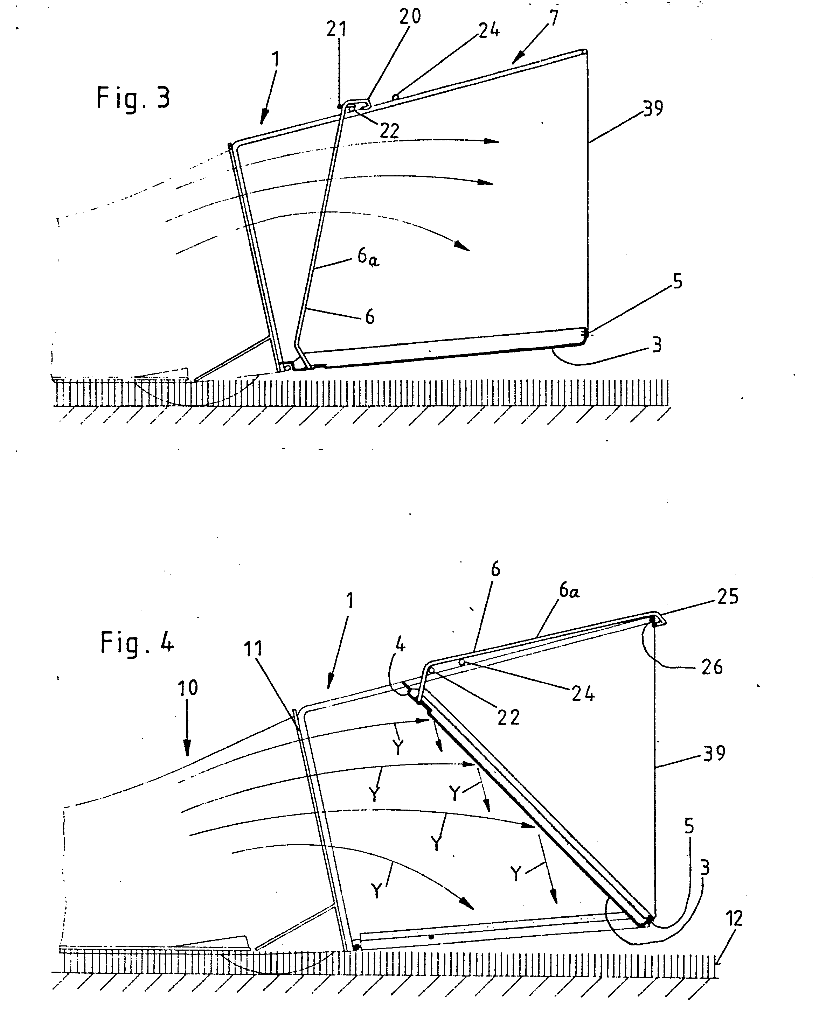

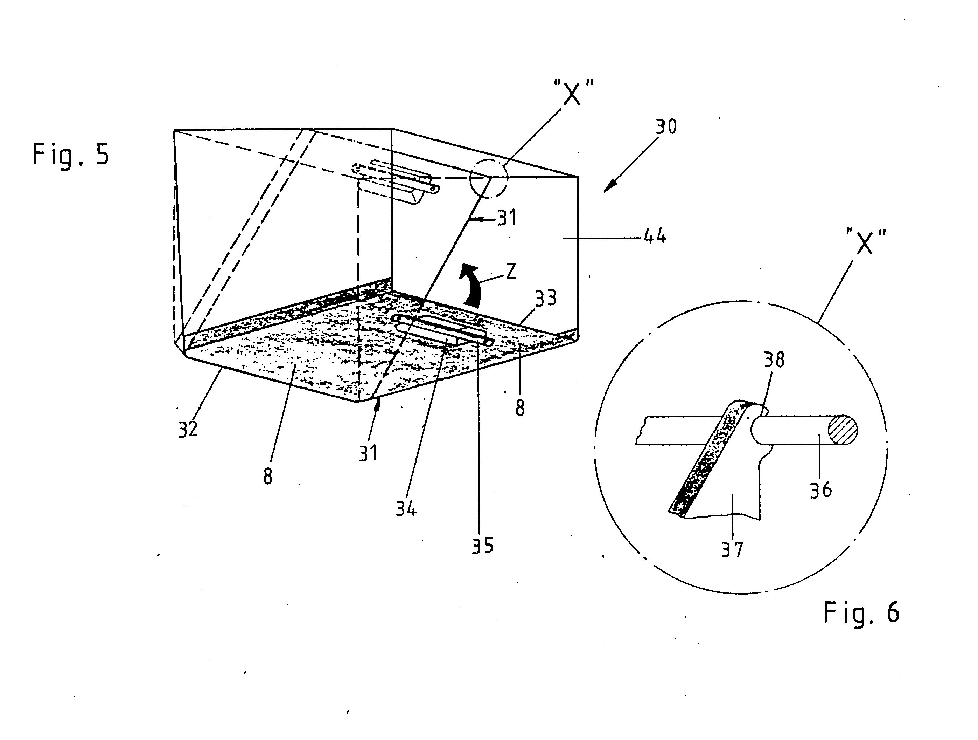

Der Boden 3 ist an seiner der Fangöffnung 2 der Fangvorrichtung zugekehrten Seite 4 anhebbar und dient in der angehobenen Stellung als Umlenkvorrichtung für das aus der Auswurföffnung 11 des Rasenmähers 10 ausgeworfene Schnittgut in Richtung auf den Rasen 12, wie durch die Pfeile y in Fig. 3 und 4 angedeutet ist.

Wie die Fig. 2 und 4 zeigen, füllt der Boden 3 in seiner angehobenen oder Umlenkstellung den freien Querschnitt der Fangvorrichtung 1 im wesentlichen vollständig aus, so daß auch solches Schnittgut, das in den oberen Bereich der Fangvorrichtung vom Rasenmäher ausgeworfen wird, mit Sicherheit zum Rasen 12 hin nach unten durch die vom Boden freigegebene Öffnung eines Bodenrahmens 14 abgelenkt wird.

Der Boden 3 ist an seiner der Fangöffnung 2 abgewandten Seite 13 in geeigneter Weise bei 5 an der Fangvorrichtung angelenkt. Diese nicht näher dargestellte Anlenkung kann aus einer lösbaren oder unlösbaren Schwenkverbindung des Bodens z.B. mit dem Rahmen 14 des Gestelles 15 der Fangvorrichtung bestehen. Die Schwenkverbindung kann sich aus zwei nach beiden Seiten des Bodens vorstehenden Schwenkzapfen zusammensetzen, die in Ausnehmungen der beiden seitlichen Rahmenleisten 16, 17 des Rahmens 14, gegebenenfalls rastend, eingreifen. Selbstverständlich ist auch eine übliche Schwenkachse denkbar, die sich durch die Seitenwände des Bodens und der Rahmenleisten 16, 17 hindurch erstreckt. Daneben ist aber auch eine Anordnung denkbar, bei der beidseitig vorstehende Achszapfen des Bodens in einseitig offene Längsnuten der Rahmenleisten 16 und 17 eingeschoben werden und sich am Ende des Schlitzes oder der Nut abstützen. Das kastenförmige Gestell kann aus zum Teil gebogenen und miteinander verschweißten Drähten bestehen, das mit Ausnahme der Fangöffnung von luftdurchlässigem, textilartigem Material umgeben ist.

Fig. 1 zeigt, daß an der der Fangöffnung 2 zugekehrten Seite 4 des Bodens 3 ein Stab 6 mittels einer auf die Oberseite des Bodens aufgeschraubten Lasche 40 über eine Abkröpfung 41 beweglich befestigt ist. Diese Abkröpfung 41 ist das äußere Ende eines unteren, parallel zum Boden 3 und dessen Vorderseite 4 verlaufenden Armes 18 des Stabes 6. Der Stab 6 ist im Bereich der einen Seitenwand 19 der Fangvorrichtung im rechten Winkel etwa parallel zu dieser nach oben abgewinkelt. Etwas oberhalb des Bodens 3 ist der Stab 6 mit einer Abwinklung 20 versehen. An dieser Abwinklung ist der Stab um etwa 30° bis 45° zur Rückwand 39 der Fangvorrichtung hin abgebogen und mit diesem Teil 6a geradlinig durch eine Öffnung 42 in der Oberseite 7 der Fangvorrichtung hindurchgeführt sowie in einer U-förmigen Arretierung 21 eines Querstabes 22 der Fangvorrichtung gehalten. Der Stab 6 ist hinter der U-förmigen Arretierung 21 etwa parallel zur Oberseite 7 der Fangvorrichtung gerichtet und bildet anschließend einen Handgriff 23, der rechtwinklig zur Seitenwand 19 nach innen etwa parallel zur Oberseite 7 und Rückwand 39 abgebogen ist. Dieser Handgriff 23 liegt in der normalen Stellung des Bodens 3 gemäß Fig. 1 zwischen dem Querstab 22 und einem weiteren Querstab 24, der im Abstand parallel zu dem Querstab 22 an der Oberseite 7 der Fangvorrichtung befestigt ist und ebenso wie der Querstab 22 zur Halterung des das Gestell 15 an den Seiten und oben umgebenden luftdurchlässigen Materials dient. Die Abwinklung 20 des Stabes 6 ermöglicht ein bequemeres Herausziehen des Stabes in Richtung der dem Rasenmäher 10 abgekehrten Rückseite der Fangvorrichtung, die in der Regel an der Rückseite des Rasenmähers angebracht ist. Darüber hinaus ist die Abwinklung 20 so beschaffen, daß in der gemäß Fig. 2 abgehobenen Stellung des Bodens 3 der Stab 6 eine Lage einnehmen kann, die etwa parallel zu der Oberseite 7 des Fangvorrichtung verläuft, also um den Querstab 22 herum über den Querstab 24 gelegt und mit seinem Handgriff 23 hinter dem aus Fig. 4 ersichtlichen Querstab 26 des Gestells 15 arretierbar ist. Dadurch wird der Boden 3 in der in Fig. 4 gezeigten, den lichten Querschnitt der Fangvorrichtung vollständig ausfüllenden Stellung, also in einer um etwa 45° geneigten Umlenkstellung, festgehalten. Fig. 2 zeigt, daß der Querstab 24 als Stützstab für den Stab 6 in seiner an der Rückseite der Fangvorrichtung arretierten Stellung dient. Die Fig. 3 und 4 zeigen gleichzeitig, daß der Handgriff 23 einen Haken 25 bildet, der in der normalen Stellung des Bodens 3 gemäß Fig. 3 den Querstab 22 und in der angehobenen Stellung des Bodens gemäß Fig. 4 den Querstab 26 an der oberen Rückseite 39 der Fangvorrichtung zwecks Arretierung hintergreift.

Es ist somit ersichtlich, daß die Fangvorrichtung in ihrer an die Auswurföffnung 11 des Rasenmähers 10 angesetzten Stellung sowohl in ihrer normalen Funktion als Fangkorb für das Schnittgut verwendet werden kann, wenn der Boden 3 die in Fig. 3 gezeigte untere oder normale Stellung einnimmt, als auch als Umlenkvorrichtung für das Schnittgut in ihrer in Fig. 4 angehobenen und arretierten Stellung dient.

Fig. 5 zeigt eine zweite Ausführungsform einer korbartigen Fangvorrichtung 30, mit einem Boden 31 in angehobener Umlenkstellung und in Normalstellung. Der Boden ist wiederum an einem Gestell 43 mit seiner Rückseite 32 schwenkbar angebracht, die parallel zu seiner der Fangöffnung 44 zugekehrten Vorderseite 33 ist. Der Boden 31 ist an der Unterseite mit einer Griffausnehmung 34 mit einem Handgriff 35 versehen, um den Boden leichter um seine Rückseite 32 in die angehobene Umlenkstellung in Richtung des Pfeiles Z schwenken zu können. In der oberen, angehobenen Stellung des Bodens ist dessen Vorderseite 33 durch eine Rastverbindung mit der Fangvorrichtung verbunden. Diese Rastverbindung besteht gemäß Fig. 6 aus einer Raststange 36, die an der Vorderseite 33 des Bodens parallel zu dieser befestigt ist und die Rastöffnung 38 eines elastischen Rasthakens 37

0133987

eingreift, dessen Umfang etwas größer als 180° ist und der derart elastisch spreizbar ist, daß die Raststange 36 unter Rastwirkung in die Rastöffnung 38 des Rasthakens 37 einschnappt. Die Dimensionierung der Teile ist dabei so gewählt, daß einerseits eine sichere Halterung des Bodens gewährleistet ist, andererseits aber von jeder Bedienungsperson ein Lösen dieser Rastverbindung durch Betätigung des Bodens mittels des Handgriffs 35 möglich ist.

Selbstverständlich ist auch hier eine andersartige Feststellvorrichtung zwischen Boden und Gestell möglich. Die vorliegende Ausgestaltung zeichnet sich jedoch durch eine einfache Bauweise und Wirkungsweise aus.

## Patentansprüche

1. Fangvorrichtung für das Schnittgut eines Rasenmähers (10), insbesondere Sichelmähers, welcher mit
   seiner Fangöffnung (2; 44) an dem Rasenmäher (10)
   ansetzbar sowie mit einem Boden (3; 31) versehen
   ist, dadurch gekennzeichnet, daß der Boden (3;
   31)an seiner der Fangöffnung (2; 44) abgekehrten
   Seite (4; 33) in einem Gestell (15; 43) schwenkbar gelagert und an seiner der Fangöffnung (2;
   44) zugekehrten Seite (4; 33) mit einer Feststellvorrichtung (6; 37) zur Arretierung am
   Gestell (15; 43) in seiner angehobenen Stellung
   als Umlenkvorrichtung für das aus der Auswurföffnung (11) des Rasenmähers (10) ausgeworfene
   Schnittgut in Richtung auf den Rasen (12) versehen ist.

2. Fangvorrichtung nach Anspruch 1, dadurch gekennzeichnet, daß der Boden (3; 31) in der angehobenen Stellung den freien Querschnitt der Fangvorrichtung im wesentlichen vollständig ausfüllt.

3. Fangvorrichtung nach Anspruch 1 oder 2, dadurch gekennzeichnet, daß der Boden (3) an seiner der Fangöffnung (2) abgewandten Seite (13) an einem Gestell (15) angelenkt (bei 5) ist und daß ein an der der Fangöffnung (2) zugekehrten Seite (4) des Bodens (3) beweglich befestigter Stab (6) durch die Oberseite (7) der Fangvorrichtung (1) hindurchgeführt und in den beiden Stellungen des Bodens (3) auf der Oberseite (7) des Gestells (15) festlegbar ist.

4. Fangvorrichtung nach Anspruch 1, dadurch gekennzeichnet, daß die Feststellbarkeit (3; 31) des Bodens zumindest in seiner oberen Umlenkstellung an dem Gestell (15; 43) mittels einer Rastvorrichtung (23, 26; 36, 37) vorgesehen ist.

5. Fangvorrichtung nach einem der Ansprüche 1, 2 oder 4, dadurch gekennzeichnet, daß die Unterseite des Bodens (31) nahe seiner Vorderseite (33) mit einem Handgriff (35) versehen ist.

Fig. 1

Fig. 2

0133987

Fig. 3

Fig. 4

Fig. 5

Fig. 6

"X"

30

31

44

Z

33

8

32

8

31

34

35

38

36

37

Europäisches
Patentamt

## EUROPÄISCHER RECHERCHENBERICHT

| EINSCHLÄGIGE DOKUMENTE | | | EP 84109090.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.X) 4 |
| X | GB - A - 500 675 (JAMES OLIVER CAINE)<br>* Gesamt * | 1 | A 01 D 34/70<br>A 01 D 34/42 |
| A | | 3,4 | |
| | -- | | |
| A | US - A - 2 067 916 (G.C. HAFFNER)<br>* Fig. 1,2 * | 1 | |
| | -- | | |
| A | US - A - 3 760 572 (MARION)<br>* Fig. 2 * | 1 | |
| | -- | | |
| A | EP - A2 - 0 071 721 (OUTILS WOLF)<br>* Fig. 3,4 * | 1 | |
| | ---- | | |

RECHERCHIERTE
SACHGEBIETE (Int. Cl. X 4

A 01 D 34/00

Der vorliegende Recherchenbericht wurde für alle Patentansprüche erstellt.

| Recherchenort | Abschlußdatum der Recherche | Prüfer |
|---|---|---|
| WIEN | 18-09-1984 | SCHWAB |